# NEUE EUROPÄISCHE PATENTSCHRIFT

(11) **EP 0 255 620 B2**
(45) Veröffentlichungstag und Bekanntmachung des Hinweises auf die Entscheidung über den Einspruch: **24.08.1994**
(45) Hinweis auf die Patenterteilung: 11.04.1990
(21) Anmeldenummer: 87109910.7
(22) Anmeldetag: 09.07.1987
(51) Int. Cl.: B65G 13/071, B65G 13/11, B62D 65/00, B65G 35/06

(54) **Rollenbahn für Fahrzeugkarosserie-Transportschlitten**
Rollerway for conveyor dollies for motor vehicle bodies
Convoyeur à rouleaux destiné aux châssis ou transport pour carroseries de véhicules

(30) Priorität: 05.08.1986 DE 3626515; 07.04.1987 DE 3711697
(43) Veröffentlichungstag der Anmeldung: 10.02.1988
(73) Patentinhaber: Dürr GmbH, D-70435 Stuttgart (DE)
(72) Erfinder: Trefz, Udo, D-7141 Steinheim (DE); Besinger, Hartwig, D-7142 Marbach-Rielingshausen (DE)
(74) Vertreter: Hoeger, Stellrecht & Partner

(56) Entgegenhaltungen:
- EP-A- 0 009 508
- EP-A- 0 149 694
- DE-A- 2 110 989
- DE-A- 2 328 206
- DE-C- 512 123
- DE-U- 7 244 015
- GB-A- 2 004 243

## Beschreibung

Die Erfindung betrifft eine Rollenbahn für Fahrzeugkarosserie-Transportschlitten, mit einem sich in Transportrichtung erstreckenden Gestell mit seitlichen Rahmenschenkeln, zwischen denen hintereinander mehrere Antriebswellen drehbar gelagert sind, welche jeweils zwei Tragrollen zum Aufliegen und zwei Spurkränze zum Führen von Transportschlittenkufen aufweisen und paarweise über jeweils eine Triebverbindung, die an den Antriebswellen, einer der Tragrollen benachbart, befestigte Ritzel umfaßt, miteinander gekoppelt und so insgesamt antreibbar sind, wobei die Ritzel und die Antriebswellen einen kleineren Durchmesser als die Tragrollen aufweisen, sowie mit einer von mindestens einer Abdeckplatte gebildeten und sich über die Ritzel sowie die Antriebswellenbereiche kleineren Durchmessers erstreckenden Abdeckung zum Abdecken von sich zwischen den Antriebswellen befindenden Gestellfeldern, welche fensterartige Öffnungen für den Durchtritt der Tragrollen sowie der neben diesen auf den Antriebswellen angebrachten Spurkränze aufweist.

Durch die Firma Dürr GmbH ist bereits eine Rollenbahn für Fahrzeugkarosserie-Transportschlitten bekanntgeworden, bei der jede der ungeteilten Antriebswellen dem einen der seitlichen Längsrahmenschenkel des Gestells benachbart ein Kettenzahnrad trägt, über das eine durch einen Getriebemotor angetriebene Transportkette verläuft. Jede der Antriebswellen hat zwischen den beiden seitlichen Längsrahmenschenkeln des Gestells im wesentlichen überall denselben Durchmesser und bildet so eine einzige Tragrolle, auf der die beiden Kufen der Transportschlitten aufliegen, wobei die eine Schlittenkufe zwischen zwei auf der Tragrolle befestigten Spurkränzen geführt wird.

Die Tragrollen ragen ungefähr mit einem Zehntel ihres Durchmessers über die von mehreren, in Transportrichtung hintereinander angeordneten Abdeckplatten gebildete Ebene hinaus, so dass sich in der Abdeckung zwischen jeweils zwei Abdeckplatten ein Querschlitz ergibt, der die Tragrollen und die Spurkränze freigibt. Damit die Triebverbindungen, über die die Antriebswellen miteinander verbunden sind und angetrieben werden, möglichst wenig verschmutzen, besitzen die seitlichen Längsschenkel des Gestellrahmens im Vertikalschnitt senkrecht zur Transportrichtung ein ungefähr C-förmiges Profil, welches zur Rollenbahn-Längsmitte hin offen ist, so dass der eine Längsschenkel des Gestellrahmens die Kettenzahnräder und die Antriebskette überfängt und abdeckt. An den seitlichen Längskanten der Abdeckplatten sind umgekehrt L-förmige Tragwinkel befestigt, die auf den Längsschenkeln des Gestellrahmens aufliegen und so zusammen mit den Abdeckplatten eine sich in Transportrichtung erstreckende Mulde bilden, deren Boden von den Tragrollen unterbrochen wird.

Bei einer anderen bekannten Rollenbahn für Fahrzeugkarosserie-Transportschlitten sind an seitlichen Längsschenkeln eines Gestellrahmens Tragrollen gelagert, wobei einander gegenüberliegende Tragrollen nicht durch Antriebswellen miteinander verbunden sind. Deshalb benötigt diese bekannte Rollenbann an beiden Längsseiten Triebverbindungen in Form jeweils eines Kettenzahnrads pro Tragrolle und mehrerer Antriebsketten, wobei durch jeweils eine Antriebskette zwei einander in Transportrichtung benachbarte Tragrollen miteinander verbunden werden.

Bei einer älteren Rollenbahn der Firma DE-MAG für nicht näher spezifiziertes Transportgut handelt es sich im übrigen um eine Rollenbahn der eingangs erwähnten Art. Bei dieser Rollenbahn besitzt jede Antriebswelle zwei Ritzel, die zwischen der einen Tragrolle und dem einen seitlichen Rahmenschenkel angeordnet sind und bei denen es sich um Kettenräder handelt, d. h. die Triebverbindungen zum paarweisen Koppeln aufeinanderfolgender Antriebswellen bestehen aus zahnradartigen Kettenrädern und über diese verlaufenden Gliederketten. Des weiteren weist jede Antriebswelle dieser Rollenbahn zwei Spurkränze auf, die zu beiden Seiten einer der beiden Tragrollen angeordnet sind. Die Abdeckung ist an ihren beiden Längsrändern nach unten abgekantet, liegt auf den seitlichen Rahmenschenkeln auf und ist an diesen befestigt.

Der Erfindung lag die Aufgabe zugrunde, diese Rollenbahn der eingangs erwähnten Art so auszubilden, daß sie trotz einer eine Rollenbahn-Oberseite bildenden und die Verschmutzungsgefahr aller Teile der Rollenbahn minimierenden Abdeckung eine möglichst geringe Bauhöhe und eine möglichst kleine Breite aufweist, was sich erfindungsgemäß dadurch erreichen läßt, daß die Ritzel zwischen den in ihrer Breite derjenigen einer Transportschlittenkufe entsprechenden Tragrollen der betreffenden Antriebswelle angeordnet und als Zahnscheiben ausgebildet werden, über welche Zahnriemen der Triebverbindungen verlaufen, und daß die Spurkränze den Außenseiten der Tragrollen der betreffenden Antriebswelle benachbart angeordnet werden.

Durch die erfindungsgemäße Lösung lassen sich folgende Vorteile erzielen:
Da die Kufen der zu transportierenden Fahrzeugkarosserie-Transportschlitten einen vorgegebenen Querabstand voneinander haben, gilt dies auch für den Querabstand der beiden Tragrollen der erfindungsgemäßen Rollenbahn bzw. der durch die Erfindung verbesserten älteren Rollenbahn, wenn letztere mit Fahrzeugkarosserie-Transportschlitten zusammenwirken soll. Da bei der erfindungsgemäßen Rollenbahn die Ritzel zwischen den einen bestimmten Querabstand voneinander aufweisenden Tragrollen angeordnet sind, läßt sich die erfindungsgemäße Rollenbahn wenigstens um die Breite des Ritzelpaares schmäler gestalten als die durch die Erfindung verbesserte ältere Rollenbahn.

Durch die Verwendung von Zahnriemen und Zahnscheiben wird der Vorteil erreicht, daß sich eine Zahnscheibe mit einem kleineren Durchmesser ausbilden lässt als ein kettenzahnrad, so daß sich die Banhöhe der Rollenbahn und insbesondere die Höhenlage der Abdeckplatte gegenüber einer Rollenbahn mit Antrieb durch ketten und kettenzahnräder vermindern lässt, obwohl die Triebverbindungen unter der Abdeckplatte angeordnet sind.

Aus der EP-0 009 508-A1 ist es bekannt, die Triebverbindungen von Rollenbahnen aus Zahnscheiben und über diese verlaufenden Zahnriemen zu bilden. Bei dieser bekannten Rollenbahn sind jedoch die Antriebswellen in Stehlagern gelagert, welche auf seitliche Rahmenschenkel eines sich in Transportrichtung erstreckenden Gestells aufgesetzt sind, und außerdem besitzt jede Antriebswelle zwei Baugruppen, deren jede aus einer Tragrolle und einer auf der Außen- oder Innenseite der letzteren angeordneten Zahnscheibe besteht.

Eine Ausführungsform der erfindungsgemäßen Rollenbahn, welche sich besonders billig herstellen läßt und besonders nieder baut, ergibt sich dann, wenn die beiden seitlichen Gestellrahmenschenkel identisch ausgebildet sind und einen ungefähr Z-förmigen Querschnitt aufweisen, die Tragrollen die seitlichen Gestellrahmenschenkel überragen und die Abdeckplatte auf den Rahmenschenkeln mit seitlichen Randbereichen aufliegt und letztere zusammen mit den die Antriebswellen abdeckenden Abdeckplattenbereichen eine Ebene bilden. Bei dieser Ausführungsform lassen sich die seitlichen Gestellrahmenschenkel aus einem einzigen Profil herstellen, derart, daß sie zur Längsmittelebene des Gestells spiegelbildlich verlaufen und ausgebildet sind.

Im folgenden wird eine besonders vorteilhafte Ausführungsform der erfindungsgemäßen Rollenbahn anhand der beigefügten Zeichnung erläutert; in der Zeichnung zeigen:

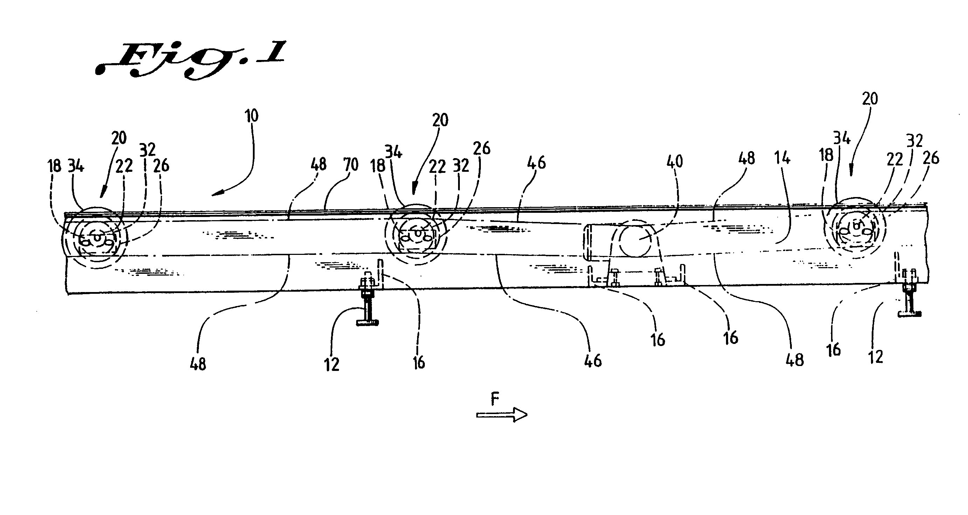

Fig. 1: Eine Seitenansicht eines Längsabschnitts der Rollenbahn;
Fig. 2: eine Draufsicht auf diesen Längsabschnitt der Rollenbahn, jedoch nach dem Entfernen von die Abdeckplatten bildenden Abdeckblechen, und
Fig. 3: einen Schnitt nach der Linie 3-3 in Figur 2 durch die Rollenbahn, jedoch mit dem die Schnittebene durchsetzenden Abdeckblech.

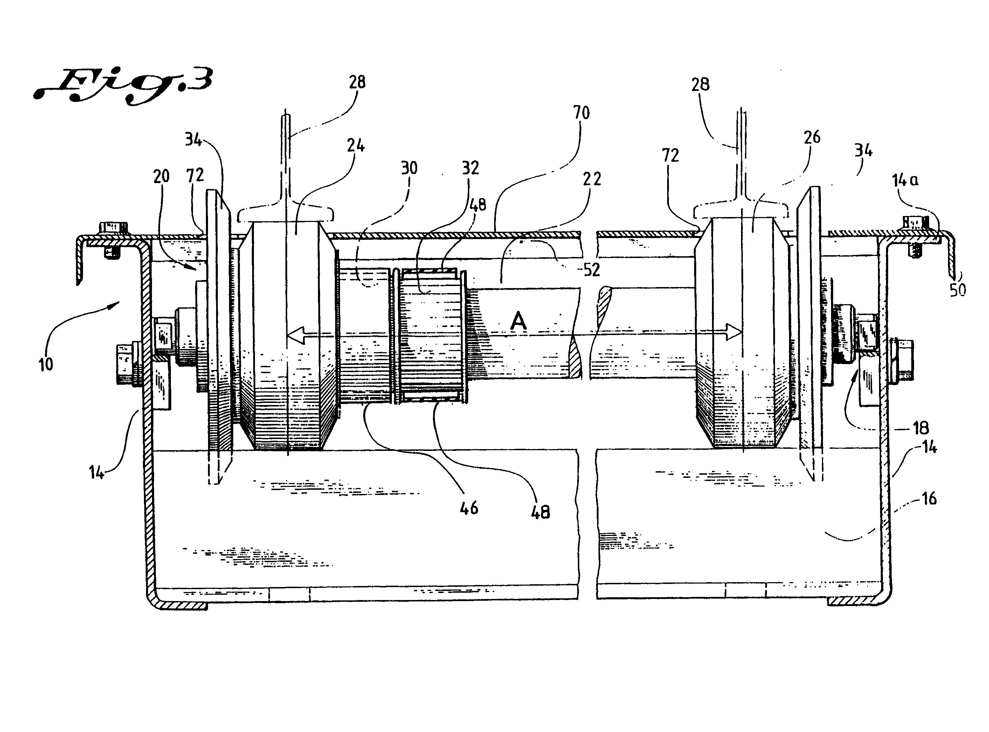

Ein als Ganzes mit 10 bezeichnetes Gestell der Rollenbahn besteht im wesentlichen aus auf einzeln höhenjustierbaren Füssen 12 stehenden seitlichen Längstragern 14 und Querträgern 16, die in gleichmässigen Abständen voneinander in Transportrichtung F hintereinander angeordnet und mit ihren Enden an den Längsträgern 14 befestigt sind. An den Längsträgern 14 sind in gleichen Abständen voneinander Lagervorrichtungen 18 angebracht, die der drehbaren Lagerung von als Ganzes mit 20 bezeichneten Antriebswellen dienen. Eine dieser Antriebswellen soll anhand der Figur 3 näher erläutert werden.

Erfindungsgemäss besitzt die Antriebswelle einen Wellenschaft 22, auf dem im Abstand voneinander zwei Tragrollen 24 und 26 befestigt sind. Erfindungsgemäss entspricht die Breite einer jeden Tragrolle 24,26 der Breite einer der gestrichelt angedeuteten Kufen 28 der im übrigen nicht dargestellten Transportschlitten, der Mittenabstand A der beiden Tragrollen 24 und 26 voneinander ist gleich dem Mittenabstand der Kufen 28 bzw. derjenigen Bereiche der Transportschlitten, mit denen diese auf den Tragrollen aufliegen, und abgesehen von im folgenden noch zu erörternden Teilen der Antriebswellen 20 hat der Wellenschaft 22 überall einen wesentlich kleineren Durchmesser als die Tragrollen 24 und 26.

Zwischen den Tragrollen 24 und 26, und zwar einer der beiden Tragrollen benachbart, sind auf dem Wellenschaft 22 zwei Zahnscheiben 30 und 32 befestigt, während den Aussenseiten der Tragrollen 24 und 26 benachbart auf dem Wellenschaft 22 jeweils ein Spurkranz 34 fest angebracht ist. Wie die Figur 3 erkennen lässt, ist es nur erforderlich, den Durchmesser des Wellenschafts 22 zwischen den beiden Tragrollen 24 und 26 und insbesondere zwischen der Zahnscheibe 32 und der Tragrolle 26 wesentlich kleiner zu wählen als den Durchmesser der beiden Tragrollen 24, 26.

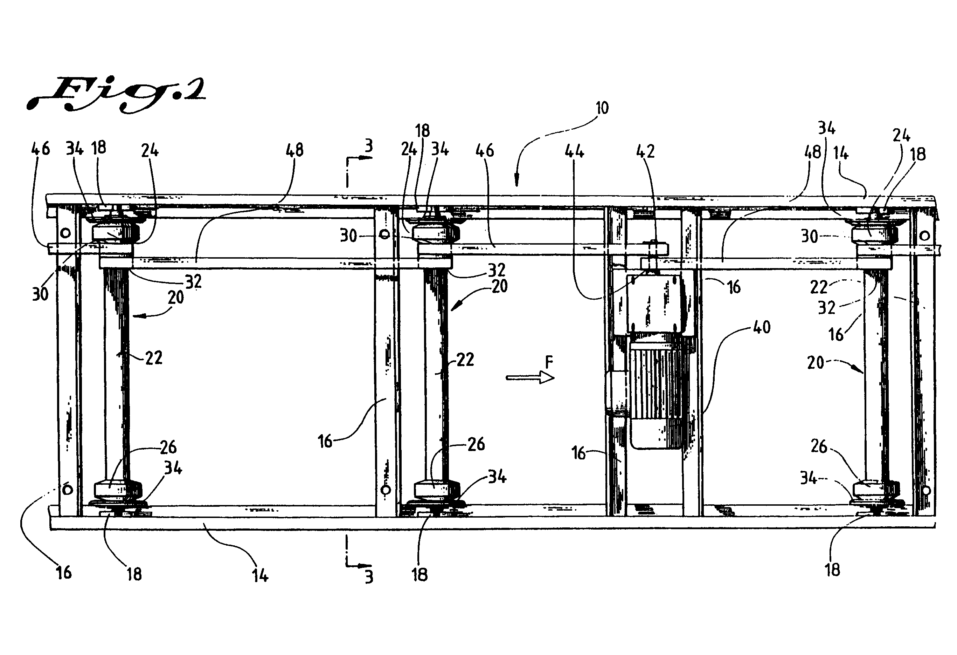

Die Figur 2 zeigt einen elektrischen Getriebemotor 40, auf dessen Abtriebswelle zwei Zahnscheiben 42 und 44 befestigt sind. Über diese verläuft jeweils ein Zahnriemen 46 bzw. 48, der auch über eine der Zahnscheiben 30 und 32 der benachbarten Antriebswellen 20 verläuft.

In gleicher Weise sind die einander unmittelbar benachbarten Antriebswellen 20 paarweise über Zahnriemen 46 bzw.

48 miteinander verbunden, so dass sich über den Getriebemotor 40 sämtliche Antriebswellen 20 antreiben lassen.

Vorteilhafterweise haben die Längsträger 14 ein ungefähr Z-förmiges Profil (sh. Figur 3), dessen oberer Schenkel auf einem Niveau etwas unterhalb der Kuppen der Tragrollen 24 und 26 liegt. Auf diesen Längsträger werden nun tafelförmige, an ihren seitlichen Längsrändern bei 50 und an ihren vorderen und hinteren (in Transportrichtung gesehen) Rändern bei 52 nach unten abgekantete Abdeckbleche 70 aufgelegt und an den oberen Schenkeln 14a der Längsträger 14, z.B. mittels Schrauben, befestigt. Diese Abdeckbleche stossen in Längsrichtung der Rollenbahn gegeneinander und ergeben so eine im wesentlichen lückenlose Abdeckung. Sie besitzen nur verhältnismässig kleine, fensterförmige Öffnungen 72 für den Durchtritt jeweils einer der Tragrollen 24, 26 sowie eines Spurkranzes 34. Die erfindungsgemäss verwendeten Zahnscheiben 30 und 32 lassen sich mit einem wesentlich kleineren Aussendurchmesser herstellen als Kettenzahnräder, so dass der Durchmesser einer Zahnscheibe mit über sie verlaufendem Zahnriemen wesentlich geringer als derjenige der Tragrollen ist, was sich bezüglich der Verwendung einer durchgehenden Abdeckung vorteilhaft auswirkt. Infolge des im Vergleich zu Kettenzahnrädern kleinen Durchmessers der Zahnscheiben 30, 32 verbleibt trotz der geringen Bauhöhe der erfindungsgemässen Rollenbahn unter den Abkantungen 52 noch Platz für die Zahnriemen 46.

Wie sich insbesondere aus Fig. 3 ergibt, erstrecken sich die Abdeckplatten erfindungsgemäss über alle Bereiche der Antriebswellen, die zwischen den seitlichen Gestellrahmenschenkeln liegen.

## Patentansprüche

1. Rollenbahn für Fahrzeugkarosserie-Transportschlitten (28), mit einem sich in Transportrichtung erstreckenden Gestell (10) mit seitlichen Rahmenschenkeln (14), zwischen denen hintereinander mehrere Antriebswellen (22) drehbar gelagert sind, welche jeweils zwei Tragrollen (24, 26) zum Aufliegen und zwei Spurkränze (34) zum Führen von Transportschlittenkufen (28) aufweisen und paarweise über jeweils eine Triebverbindung (30, 32, 46, 48), die an den Antriebswellen, einer der Tragrollen benachbart, befestigte Ritzel (30, 32) umfaßt, miteinander gekoppelt und so insgesamt antreibbar sind, wobei die Ritzel (30, 32) und die Antriebswellen (22) einen kleineren Durchmesser als die Tragrollen (24, 26) aufweisen, sowie mit einer von mindestens einer Abdeckplatte gebildeten und sich über die Ritzel (30, 32) sowie die Antriebswellenbereiche kleineren Durchmessers erstreckenden Abdeckung (70) zum Abdecken von sich zwischen den Antriebswellen (22) befindenden Gestellfeldern, welche fensterartige Öffnungen (72) für den Durchtritt der Tragrollen (24, 26) sowie der neben diesen auf den Antriebswellen (22) angebrachten Spurkränze (34) aufweist, dadurch gekennzeichnet, daß die Ritzel (30, 32) zwischen den in ihrer Breite derjenigen einer Transportschlittenkufe (28) entsprechenden Tragrollen (24, 26) der betreffenden Antriebswelle (22) angeordnet und als Zahnscheiben ausgebildet sind, über welche Zahnriemen (46, 48) der Triebverbindungen verlaufen, und daß die Spurkränze (34) den Außenseiten der Tragrollen (24, 26) der betreffenden Antriebswelle (22) benachbart angeordnet sind.

2. Rollenbahn nach Anspruch 1, dadurch gekennzeichnet, daß die beiden seitlichen Gestellrahmenschenkel (14) identisch ausgebildet sind und einen ungefähr Z-förmigen Querschnitt aufweisen, daß die Tragrollen (24, 26) die seitlichen Gestellrahmenschenkel (14) überragen und daß die Abdeckplatte (70) auf den Rahmenschenkeln mit seitlichen Randbereichen aufliegt und letztere zusammen mit den die Antriebswellen (22) abdeckenden Abdeckplattenbereichen eine Ebene bilden.

## Claims

1. Rollerway for conveyor skids (28) for motor vehicle bodies, comprising a frame (10) extending in the direction of conveyance and having frame side members (14), a plurality of drive shafts (22) rotatably mounted one behind the other between said side members, said shafts each having two bearing rollers (24, 26) for supporting and two wheel flanges (34) for guiding conveyor skid runners (28) and being coupled with one another in pairs via a respective drive connection (30, 32, 46, 48) and thus being driven altogether, said drive connection comprising pinions (30, 32) secured to the drive shafts adjacent one of the bearing rollers, the pinions (30, 32) and the drive shafts (22) having a smaller diameter than the bearing rollers (24, 26), as well as a cover (70) for covering frame sections located between the drive shafts (22), said cover being formed by at least one cover plate and extending over the pinions (30, 32) as well as the drive shaft sections having a smaller diameter, said cover also having window-like openings (72) for the bearing rollers (24, 26) as well as the wheel flanges (34) mounted adjacent thereto on the drive shafts (22) to pass through, characterized in that the pinions (30, 32) are arranged between the bearing rollers (24, 26) of the relevant drive shaft (22) corresponding in their width to that of a conveyor skid runner (28) and are designed as toothed wheels, toothed belts (46, 48) of the drive connections extending over said toothed wheels, and that the wheel flanges (34) are arranged adjacent the outer sides of the bearing rollers (24, 26) of the relevant drive shaft (22).

2. Rollerway as defined in claim 1, characterized in that the two side frame members (14) are of identical design and have an approximately Z-shaped cross section, that the bearing rollers (24, 26) protrude above the side frame members (14) and that the cover plate (70) is supported on the side members with lateral edge regions and the latter form a plane together with the cover plate regions covering the drive shafts (22).

## Revendications

1. Transporteur à galets pour traîneaux de transport (28) de carrosserie de véhicule comprenant un châssis (10), qui s'étend dans la direction de transport et qui présente des ailes de cadre latérales (14), entre lesquelles sont supportés l'un derrière l'autre, de manière à pouvoir tourner, plusieurs arbres d'entraînement (22) qui présentent chacun deux galets porteurs (24, 26) pour le support de patins de traîneau de transport (28) et deux boudins (34) pour leur guidage, sont couplés l'un à l'autre par paires, chaque fois par une liaison motrice (30, 32, 46, 48) qui comprend des pignons (30, 32), fixés sur les arbres d'entraînement au voisinage d'un des galets porteurs, et peuvent ainsi être entraînés ensemble, les pignons (30, 32) et les arbres d'entraînement (22) présentant un diamètre inférieur aux galets porteurs (24, 26) ainsi qu'un couvercle (70) qui est formé d'au moins une plaque de recouvrement et qui s'étend par-dessus les pignons (30, 32) et les zones d'arbre d'entraînement de plus petit diamètre, pour couvrir des zones de châssis situées entre les arbres d'entraînement, et qui présente des ouvertures (72) de type fenêtre pour le passage des galets porteurs (24, 26) ainsi que des boudins (34) agencés à côté de ceux-ci sur les arbres d'entraînement (22), caractérisé en ce que les pignons (30, 32) sont agencés entre les galets porteurs (24, 26), de largeur correspondant approximativement à celle d'un patin (28) des traîneaux de transport, de l'arbre d'entraînement (22) concerné et en ce qu'ils sont réalisés sous la forme de disques dentés sur lesquels passent des courroies dentées (46, 48) des liaisons motrices et en ce que les boudins (34) sont agencés au voisinage des côtés extérieurs des galets porteurs (24, 26) de l'arbre d'entraînement (22) concerné.

2. Transporteur à galets suivant la revendication 1, caractérisé en ce que les deux ailes latérales (14) du cadre du châssis sont réalisées de manière identique, en ce qu'elles présentent une section transversale sensiblement en forme de Z, en ce que les galets porteurs (24, 26) font saillie au-delà des ailes latérales (14) du cadre du châssis en ce que la plaque de recouvrement (70) est en appui sur les ailes du cadre par des zones de bord latérales et en ce que ces dernières forment un plan avec les zones de plaques de recouvrement qui recouvrent les arbres d'entraînement (22).
